# EUROPEAN PATENT APPLICATION

(11) **EP 2 548 683 A1**
(43) Date of publication of application: **23.01.2013**
(21) Application number: 10847764.7
(22) Date of filing: 17.03.2010
(51) Int. Cl.: B23D 61/18

(54) **DIAMOND WIRE FOR CUTTING HARD MATERIALS**

(71) Applicant: W.Diamant Herramientas S.A., 20170 Ursurbil (Gipuzkoa) (ES)
(72) Inventor: AMADOR MARTIN, Jesús, 20170 Usurbil (Gipuzkoa) (ES); ITURRIZA ZUBILLAGA, Iñigo, 20170 Usurbil (Gipuzkoa) (ES)
(74) Representative: Molina Garcia, Julia
(86) International application number: PCT/ES2010/070157
(87) International publication number: WO 2011/113967

(57) **Abstract**

The invention describes a type of diamond wire saw used for cutting of blocks with mono-wire and multi-wire machines. These blocks of hard material can be made of stone, concrete, metal or similar. The wire is made of a steel cable and of several diamond beads distributed along the cable. The injection of a plastic layer on the surface of the cable holds in place the diamond beads, preventing from longitudinal movement as well as rotation on the cable. Each bead is made of a cylindrical body containing diamonds and presenting several ribs and grooves on its internal and external surfaces.

## Description

### Object of the invention

The new invention relates to a Diamond wire saw for cutting hard material, it brings essential new characteristics and notable advantages with respect to the known means and used for the same purposes in the current state of the art.

More specifically, the invention improves the manufacturing process of the type of diamond wire saw used in quarries for extraction of blocks and in mono-wire and multi-wire machines for cutting blocks of hard material in slabs. In the new tool, the structure of the wire saw has been simplified compared to the state of the art diamond wire saws. This invention makes the manufacturing process more productive and enables a reduction of manufacturing costs as well as an improvement in the tool performance.

The application field of this invention is the part of the industrial sector dedicated to the extraction and cutting of ornamental stone.

### Background and Summary of the invention

Experts in this field are aware of the existence of what is called "diamond wire" for its use in the cutting of hard metal blocks such as stone, concrete, metal, etc., in slabs having a thickness of 2 to 3 cm. The machines used for this job can be mono-wire; it means that they use a unique wire, performing a unique cut in each pass. Some other machines called multi-wire, have several wires cutting in parallel, performing several cuts in one pass.

In both cases, diamond wire consists essentially of a steel cable on which diamond beads are assembled, maintaining a predetermined distance between each of them. Diamond beads are made of a metallic socket, usually of steel with an internal thread, on which a diamond ring is brazed with an alloy of silver. Once all the diamond beads have been placed in their positions, the cable is coated with plastic or rubber. The injection of this material will hold beads to the support; the threaded interior part of the socket is filled which prevents undesirable rotation of beads on the cable that could create friction with the steel cable. A union is made with the two extremities of the cable in order to make a loop. This way, the wire can be tensioned during cutting operations.

Although the state of the art diamond wire, whose characteristics have been described before, has fulfilled the purpose for which they have been designed, they have some limitations that can affect behaviour and performances of the cable. The assembly of a socket with a diamond ring for the production of each bead increases the total manufacturing cost for two reasons. Firstly, because it involves the incorporation of parts that are not working directly such as the socket itself and the brazing material used for brazing of the socket with the diamond ring. Then, because this leads to quality problems, such as breakages of cables occurring most of the time at the contact point between the socket and the steel cable.

Taking into account the situation explained before, the main objective of the invention is the construction of a diamond wire saw matching with the characteristics presented at the heading. At the same time, this invention brings solutions to defaults and disadvantages affecting state of the art diamond wires. This goal has been fully achieved thanks to a diamond wire incorporating beads of the type that will be described in the following article, whose main features are comprised in the characterizing part of attached claim 1.

Basically, the diamond wire presented consists of a resistant cable made of steel or similar material, like the one used in traditional diamond wires. The wire can be used in quarries, in mono-wire machines or along with other wires in multi-wire machines. Diamond beads made of a unique diamond ring are assembled along this wire, in direct contact with the steel cable, without the use of a socket in between. The diamond ring of this new bead consists of a body with an internal diameter adapted to the diameter of the cable. The inner surface of this diamond ring contains several ribs, while the external surface has grooves made along the longitudinal direction of the ring. Beads are held on the cable in their specific position on the cable thanks to the injection of a material such as plastic or rubber on the cable. The process is the same as that used for traditional diamond wire but the effect is different as the diamond ring is directly in contact with the plastic whereas in traditional wire, a socket is present in between.

This way we obtain a diamond wire made of a steel cable and several of these new beads that present the following advantages compared to the traditional product:
- Better distribution of the diamond part on the length of the cable and as a result better quality of the cutting surface, higher cutting speed and better performance of the cable.
- Faster sharpening process due to smaller contact surface in the first cut because of external shape of the beads presenting grooves.
- Reduction of cable breakage with the elimination of the socket and as a consequence of the contact point socket-cable.
- Reduction of cable breakage with the improvement of the cable flexibility (no intermediate socket).
- Better resistance of the bead to rotation because of the interior design of the bead that ensures a union with the plastic than the thread we can find in sockets
- Reduction of manufacturing costs with the elimination of sockets and brazing material.

This way, the objectives of this invention are clearly reached.

### Brief Description of the Drawings

The characteristics and advantages of this invention can be more clearly understood with the following detailed description of an example of realisation of the same, given only for illustration purpose and not limitative, with reference to the enclosed drawings:
Figure 1 is a sectional view of a traditional diamond wire.
Figure 2 illustrates a diamond bead made for the present invention.

### Description of a Preferred Embodiment

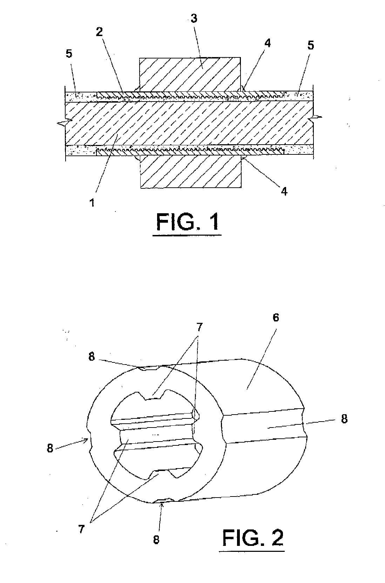

As mentioned in the foregoing, the detailed description of the preferred embodiment of the invention will be done referring to the drawings in which the various elements will be given numeral designation. Referring to Figure 1, this shows a lateral view of a longitudinal section of a current state of the art diamond wire. A cable 1, includes on its length several diamond beads made of a metallic socket 2 threaded internally. On this socket, a sintered ring 3 containing diamonds is brazed using a metallic alloy 4. The union of the diamond bead with the cable1 is made by injection of a coating material 5 around the cable. This material 5, made of plastic or rubber which avoids the displacement of beads on the cable 1 in longitudinal direction and will also prevent from rotation of the bead on the cable thanks to the penetration of material 5 between the interior surface of the threaded part of socket 2 and cable 1.

However, the beads proposed for the invention consists in a unique piece of diamond material, no intermediate socket is used as the bead is dimensioned to fit directly on the surface of the cable at a predefined position. This new bead represented in FIG-2, consist in a body 6 of cylindrical shape, presenting an axial hole for passing cable 1. This body contains many ribs 7 protruding from the internal surface and angularly equidistant, while the external surface has grooves made along the longitudinal direction of the ring. Thanks to this shape, the coating material 5 can penetrate easily inside the new body of the bead, achieving this way a simplification of the production process and improving the union between the bead 6 and cable 1 an with all the advantages that have been mentioned before.

As will be understood, the graphical representation appearing in the Figure 2 represents only an example of preferred embodiment, it illustrate the concepts defined in the invention. The number of internal ribs 7, as well as external grooves 8 can change as well as the position of these ones.

It is not considered necessary to further extend the content of this description so that a person skilled in the art will understand its scope and the advantages derived from the invention, as well as develop and carry out into practice the object thereof.

Notwithstanding the above, and understanding that the description refers only to a preferred embodiment, it is clear that several modifications can be done. These variations could affect characteristics such as shape, dimensions and material used or any other that would not alter the invention as it has been described and according to the following claims.

## Claims

1. Diamond wire for cutting hard materials, particularly wire of the type used in the cutting of blocks of hard materials such as blocks of stone, concrete, metal, etc., in quarries or for obtaining slabs generally having a thickness of 2 to 3 cm, both in mono-wire and multi-wire machines, wherein the diamond wire is composed of a steel cable (1) and a multiplicity of diamond beads placed in predefined positions throughout its length and fixed in such positions both along a longitudinal direction throughout the cable and in relation to a rotating movement of the bead with respect to the cable, with the help of a plastic or rubber casing (5) that covers the exposed parts of the cable and which penetrates into the interior of each bead in the space between each bead and the cable surface, **characterised in that** each of the beads threaded through the cable (1) comprises a unique piece (6) of diamond material, of generally cylindrical shape, having an axial hole for passing the cable (1) which contains ribs protruding from the internal surface and disposed along the longitudinal direction of the body and in angularly equidistant positions, while in relation to the external surface of the cylindrical body (6) said external surface has several grooves (8) also disposed along the longitudinal direction of the body and angularly equidistant.
